# EUROPÄISCHE PATENTSCHRIFT

(11) **EP 1 339 151 B1**
(45) Veröffentlichungstag und Bekanntmachung des Hinweises auf die Patenterteilung: **18.10.2006**
(21) Anmeldenummer: 02405116.1
(22) Anmeldetag: 14.02.2002
(51) Int. Cl.: H02H 3/05, H02H 7/26, H02J 13/00

(54) **Zeitoptimaler Empfang von Schutzbefehlen in einem Fernauslösegerät**
Time optimal reception of protection instructions in a remotely controlled trip device
Reception optimisée dans le temp de signaux d'ordre dans un dispositif de déclenchement à télécommande

(43) Veröffentlichungstag der Anmeldung: 27.08.2003
(73) Patentinhaber: ABB Schweiz AG, 5400 Baden (CH)
(72) Erfinder: Spiess, Hermann, 5245 Habsburg (CH); Benninger, Hans, 5300 Ennetturgi (CH)
(74) Vertreter: ABB Patent Attorneys

(56) Entgegenhaltungen:
- US-A- 3 626 297
- US-A- 3 643 160
- SPIESS H: "NSD 70 - A NEW FAMILY OF PROGRAMMABLE, DIGITAL PROTECTION SIGNALLING EQUIPMENT" ABB REVIEW, ABB ASEA BROWN BOVERI, ZURICH, CH, Nr. 6, 1992, Seiten 3-10, XP000311533 ISSN: 1013-3119
- FISCHER D ET AL: "DIGITAL TELEPROTECTION UNITS. A TECHNOLOGY OVERVIEW" IEEE TRANSACTIONS ON POWER DELIVERY, IEEE INC. NEW YORK, US, Bd. 7, Nr. 4, 1. Oktober 1992 (1992-10-01), Seiten 1769-1774, XP000298186 ISSN: 0885-8977

## Beschreibung

### Technisches Gebiet

Die Erfindung bezieht sich auf das Gebiet der Schutztechnik für Hoch- und Mittelspannungsnetze. Sie bezieht sich auf ein Verfahren zum zeitoptimalen Empfang von Schutzbefehlen in einem Fernauslösegerät und auf ein Fernauslösegerät gemäss dem Oberbegriff der Patentansprüche 1 und 3.

### Stand der Technik

Fernauslösegeräte oder Schutzsignalübertragungsgeräte dienen zur Übertragung von Schutz- oder Schaltbefehlen für einen Distanzschutz in elektrischen Hoch- und Mittelspannungsnetzen sowie -anlagen. Schutzbefehle bewirken beispielsweise eine direkte oder indirekte Öffnung eines Schutzschalters und dadurch eine elektrische Abtrennung eines Teiles des Netzes oder der Anlage. Andere Schutzbefehle bewirken umgekehrt eine Blockierung der Öffnung eines Schutzschalters. Schutzbefehle müssen beispielsweise von einem Abschnitt einer Hochspannungsleitung zu einem anderen übertragen werden. Dazu erzeugt ein Sender in einem Fernauslösegerät entsprechend den Schutzbefehlen analoge Signale, die über eine Signalverbindung übertragen werden. Ein Empfänger in einem anderen Fernauslösegerät detektiert die übertragenen Signale und bestimmt die entsprechende Anzahl und Art der Schutzbefehle.

Die analogen Signale liegen beispielsweise in einem Frequenzbereich zwischen 0.3 und 4 kHz. Sie werden entweder direkt in diesem Frequenzbereich übertragen, oder auf eine Trägerfrequenz moduliert und vor dem Empfänger demoduliert, oder über einen digitalen Kanal übertragen und vor dem Empfänger rekonstruiert. In jedem Fall liegt am Empfänger ein analoges, Empfangssignal an, bei dem ein Vorhandensein von einzelnen Signalen unterschiedlicher Frequenz detektiert werden muss.

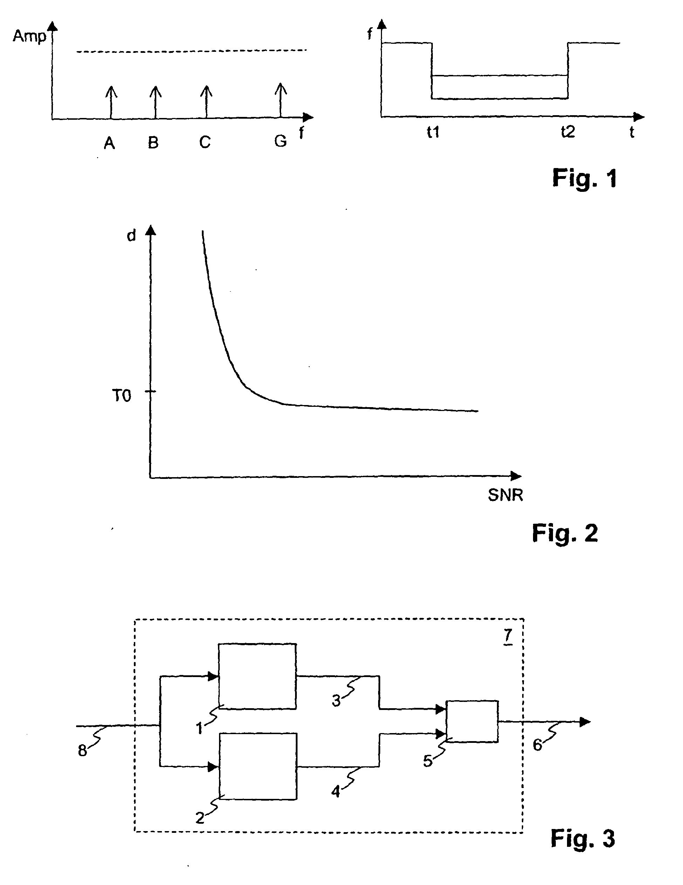

Figur 1 zeigt beispielhaft ein Ruhesignal und mehrere Befehlssignale im Frequenzbereich und im Zeitbereich für eine Übertragung von Befehlssignalen A,B,C, welche zu übertragende Schutzbefehlen oder Kombinationen von Schutzsignalen entsprechen. Eine Amplitudenachse der Darstellung ist mit Amp bezeichnet, eine Frequenzachse mit f und eine Zeitachse mit t. Die übermittelten Signale sind vorzugsweise sinusförmig und weisen jeweils einen Frequenzabstand zueinander von beispielsweise 100 Hz bis 300 Hz auf. In einem Ruhefall, dass heisst, wenn kein Schutzbefehl übertragen werden muss, wird stattdessen kontinuierlich ein Ruhesignal oder Guardsignal G gesendet. In einem Befehlsfall zwischen Zeitpunkten t1 und t2 werden ein oder mehrere Befehlssignale übertragen, in Figur 1 ist im rechten Koordinatensysem beispielhaft das Senden von Signalen auf zwei Frequenzen dargestellt. Der Empfänger detektiert ein Vorhandensein respektive eine Abwesenheit der Befehlssignale und des Ruhesignals G fortwährend und erzeugt bei ungenügender Signalqualität oder falls beide zusammen empfangen werden oder falls gar kein Signal empfangen wird, ein Alarmsignal.

Das Ruhesignal G dient einer Erhöhung der Sicherheit, indem es anzeigt, dass kein Befehlssignal A,B,C vorliegt. Ein Befehlssignal gilt erst als empfangen, wenn das Ruhesignal G nicht mehr detektiert wird.

Es ist also erforderlich; das Vorhandensein respektive die Abwesenheit einzelner periodischer Signale zu detektieren. Dabei ist zu berücksichtigen, dass die Übertragung im allgemeinen durch Störungen beeinflusst wird, welche durch einen Geräuschabstand, d.h. einem Verhältnis SNR zwischen Signal- und Störleistung charakterisierbar sind. Abhängig von der Art des Schutzbefehls werden dabei unterschiedliche Anforderungen an eine Detektion gestellt, die unter anderem durch folgende Parameter charakterisierbar ist:
- Puc: Sicherheitswert, d.h. Wahrscheinlichkeit, dass ein Befehl fälschlicherweise empfangen wird, obwohl er gar nicht gesendet wurde. Ein niedriger Wert von Puc entspricht einer hohen Sicherheit der Übertragung.
- Pmc: Verlässlichkeitswert, d.h. Wahrscheinlichkeit, dass ein Befehl, der gesendet wurde, nicht empfangen wird. Ein niedriger Wert von Pmc entspricht einer hohen Verlässlichkeit der Übertragung.
- T_{ac}: maximale tatsächliche Übertragungszeit. Diese ist abhängig von der geforderten Verlässlichkeit und dem Geräuschabstand SNR und wird weiter unten genauer definiert.
Es ist allen bekannten Übertragungs- und Detektionsverfahren gemeinsam, dass mit zunehmender Störleistung, d.h. abnehmendem SNR
- die Sicherheit abnimmt und dann fallweise wieder zunimmt, d.h. der Sicherheitswert Puc zunimmt und dann fallweise wieder abnimmt, und
- die Verlässlichkeit dauernd abnimmt, d.h. der Verlässlichkeitswert Pmc dauernd zunimmt.

Eine Detektion eines Signals mit einer bestimmten Frequenz geschieht beispielsweise mittels numerischer Korrelation des empfangenen Summensignals mit einem Vergleichssignal derselben Frequenz, oder durch Bandpassfilterung des empfangen Summensignals. Ein aufbereiteter Ausgangswert der Korrelation respektive des Bandpassfilters wird mit einem Schwellwert verglichen. Falls der aufbereitete Ausgangswert grösser als der Schwellwert ist, gilt das Signal als detektiert. Wesentliche Parameter bei der Detektion sind also eine Korrelationsdauer eines Korrelators oder ein Inverse der Bandbreite eines Bandpasses welche im Folgenden zusammengefasst als Zeitkonstante oder Übertragungszeit der Detektion bezeichnet werden, sowie die Höhe des Schwellwertes.

Für einen Detektor mit gegebener Zeitkonstante ergibt sich die in Figur 2 gezeigte Abhängigkeit zwischen Geräuschabstand SNR und maximaler tatsächlicher Übertragungszeit T_{ac} bei gegebener Verlässlichkeit. Es sei beispielsweise ein Verlässlichkeitswert Pmc von 1% gefordert. Es wird bei einem gegebenen Geräuschabstand diejenige Zeitdauer nach dem Senden eines Signals ermittelt, in welcher 99% aller gesendeten Signale beim Empfänger detektiert werden. Die derart experimentell oder theoretisch ermittelte Zeitdauer ist die maximale tatsächliche Übertragungszeit T_{ac}. Für mehrere Werte des Geräuschabstands SNR ergibt sich die in Figur 2 dargestellte Kurve. Typischerweise befindet sich die Übertragungszeit T0, mit welcher der Detektor ausgelegt wurde, im Bereich eines Knicks der Kurve: Bei hohem Geräuschabstand sinkt die maximale tatsächliche Übertragungszeit T_{ac} nicht wesentlich unter T0, mit abnehmenden Geräuschabstand nimmt sie sehr schnell zu. Die Chance, einen Befehl beschränkter Dauer nach Ablauf von T0 noch zu empfangen ist vergleichsweise klein.
Falls der Geräuschabstand bekannt ist, wird die Zeitkonstante des Detektors so klein wie möglich gemacht, wobei noch die geforderte Verlässlichkeit erreicht wird. Ist jedoch der Geräuschabstand unbekannt und kann er über einen weiten Bereich variieren, so ist keine optimale Detektion möglich. Je nachdem resultiert entweder eine zu lange Übertragungszeit, oder die Verlässlichkeit ist nicht ausreichend. Dies ist beispielsweise der Fall für das im Dokument "NSD 70 - A new family of programmable, digital protection signalling equipment", ABB Review No 6, 1992, beschriebene Fernauslösegerät. Dieses Gerät weist für jede Frequenz genau einen Detektor auf. Das Patent US 3643160 schliesslich zeigt ein Fernauslösegerät mit einem Detektor für drei unterschiedliche Frequenzen.

### Darstellung der Erfindung

Es ist deshalb Aufgabe der Erfindung, ein Verfahren zum zeitoptimalen Empfang von Schutzbefehlen in einem Fernauslösegerät und ein Fernauslösegerät der eingangs genannten Art zu schaffen, welche eine geringere Abhängigkeit von einem Geräuschabstand empfangener Signale aufweist.
Diese Aufgabe lösen ein Verfahren zum zeitoptimalen Empfang von Schutzbefehlen in einem Fernauslösegerät und ein Fernauslösegerät mit den Merkmalen der Patentansprüche 1 und 3.
Im erfindungsgemässen Verfahren zum zeitoptimalen Empfang von Schutzbefehlen in einem Fernauslösegerät werden also mindestens zwei Teildetektoren betrieben, die alle für ein Signal derselben Frequenz aber für unterschiedliche Übertragungszeiten ausgelegt sind, und gilt, wenn mindestens einer dieser Teildetektoren ein Vorhandensein des Signals detektiert, das Signal als detektiert.

Das erfindungsgemässe Fernauslösegerät weist mindestens zwei Teildetektoren auf, die alle für ein Signal derselben Frequenz aber für unterschiedliche Übertragungszeiten ausgelegt sind, und eine nicht-exklusive ODER-Verknüpfung von Ausgängen der mindestens zwei Teildetektoren zur Bildung eines Ausgangs des Detektors auf.

Es zeigt sich, dass in Abhängigkeit des gerade tatsächlich auftretenden Geräuschabstands jeweils einer der Teildetektoren eine kleinere Übertragungszeit als der oder die anderen Teildetektoren aufweist, so dass durch die ODER-Verknüpfung der Ausgänge der Teildetektoren die Übertragungszeit des Detektors gleich der Übertragungszeit des jeweils schnellsten Teildetektors ist. Dadurch ist die Übertragungszeit viel weniger vom Geräuschabstand abhängig als bei Verwendung nur eines einzigen Teildetektors.

In einer bevorzugten Ausführungsform der Erfindung weisen die mindestens zwei Teildektoren alle mindestens annähernd die gleiche Sicherheit auf. Dadurch wird auch die Sicherheit des Detektors bestmöglich an die Anforderung der Befehlsübertragung angepasst.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: schematisch einen Verlauf von Schutzsignalen im Frequenzbereich und im Zeitbereich;
- Figur 2: eine Abhängigkeit zwischen Geräuschabstand und maximaler tatsächlicher Übertragungszeit bei einem einzelnen Detektor;
- Figur 3: schematisch eine Struktur eines erfindungsgemässen Detektors;
- Figur 4: Abhängigkeiten zwischen Geräuschabstand und maximaler tatsächlicher Übertragungszeit bei mehreren Teildetektoren, die auf unterschiedliche Übertragungszeiten ausgelegt sind; und
- Figur 5: die Kurven von Figur 4, ergänzt um eine Abhängigkeit für einen erfindungsgemässen Detektor, der auf gleiche Sicherheit wie die Teildetektoren ausgelegt ist.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 3 zeigt schematisch eine Struktur eines erfindungsgemässen Detektors. Die Struktur ist durch einzelne Bauelemente oder durch ein Programm, welches einen Signalfluss entsprechend der Struktur realisiert, implementierbar. Ein erfindungsgemässer Detektor 7 weist einen ersten Teildetektor 1 und einen zweiten Teildetektor 2 auf. Ein erster Teildetektorausgang 3 des ersten Teildetektors 1 und ein zweiter Teildetektorausgang 4 des zweiten Teildetektors 2 führen auf eine nicht-exklusive ODER-Verknüpfung 5, welche daraus einen Detektorausgang 6 des Detektors 7 bildet. Eingänge der beiden Teildetektoren 1,2 sind durch einen Empfangssignaleingang 8 des Detektors 7 gespeist.

Der Detektor 7 und die Teildetektoren 1,2 sind darauf ausgelegt, ein Vorhandensein einer periodischen Schwingung einer bestimmten Frequenz in einem Analogsignal, welches am Empfangssignaleingang 8 anliegt, zu detektieren. Um Signale auf mehreren Frequenzen zu detektieren, sind entsprechend mehrere Detektoren 7 notwendig. Wirkungsprinzipien von Eintondetektoren im Sinne der Teildetektoren 1,2 sind allgemein bekannt, zwei davon werden im Folgenden angegeben:

In einer ersten Ausführungsform der Erfindung besteht ein solcher Eintondetektor aus einem Bandpass mit einer Durchlassfrequenz entsprechend dem zu detektierenden Signal, gefolgt von einem Gleichrichter zur Ermittlung einer Enveloppe des bandpassgefilterten Signals. Der Ausgang des Gleichrichters wird tiefpassgefiltert und in einem Komparator mit einem Schwellwert verglichen. Durch den Ausgang des Komparators wird bei ausreichender Amplitude des bandpassgefilterten Signals die Detektion eines Signals angezeigt. Die Übertragungszeit des Detektors ist gleich der Inversen der Bandbreite des Bandpassfilters.

In einer anderen Ausführungsform der Erfindung wird das empfangene Signal während eines Zeitfensters konstanter Länge in einem ersten Korrelator mit einem Referenzsignal mit der Frequenz des zu detektierenden Signals korreliert, und in einem zweiten Korrelator mit dem um 90° phasenverschobenen Referenzsignal. Ausgangssignale der beiden Korrelatoren werden quadriert und zu einem Summensignal addiert. Dieses Summensignal entspricht einem phasenunabhängigen Anteil des zu detektierenden Signals am empfangenen Signal, also einer asynchronen Demodulation. Das Summensignal wird in einem Komparator mit einem Schwellwert verglichen. Durch den Ausgang des Komparators wird bei ausreichender Amplitude des Summensignals die Detektion eines Signals angezeigt. Die Übertragungszeit oder Signalauswertezeit des Detektors ist gleich der Länge des Zeitfensters der beiden Korrelatoren.

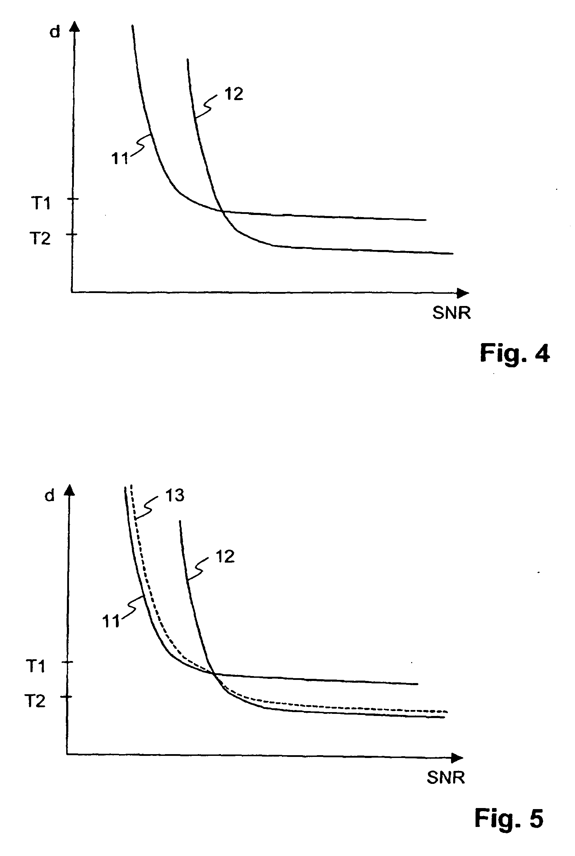

Die Funktionsweise der Erfindung wird anhand von Figur 4 erklärt. Figur 4 zeigt Abhängigkeiten zwischen Geräuschabstand und maximaler tatsächlicher Übertragungszeit T_{ac} bei mehreren Teildetektoren, die auf unterschiedlicher Übertragungszeiten ausgelegt sind. Eine erste Kennlinie 11 zeigt die maximale tatsächliche Übertragungszeit T_{ac} des ersten Teildetektors 1, der eine erste Übertragungszeit T1 aufweist. Eine zweite Kennlinie 12 charakterisiert den zweiten Teildetektor 2, der eine zweite Übertragungszeit T2 aufweist. Wie bereits eingangs erwähnt, werden die Kennlinien 11,12 beispielsweise durch Messungen unter Variation des Geräuschabstands SNR ermittelt. Eine theoretische Ermittlung einer einzelnen Kennlinie ist auch möglich, beispielsweise wie in angegeben in "Detection, Estimation, and Modulation Therory, Part I", Harry L. van Trees, John Wiley and Sons, New York, 1968-1971, Seiten 246-253.

Damit die Kurven miteinander vergleichbar sind, sind die beiden Teildetektoren 1,2 zweckmässigerweise auf den gleichen Sicherheitswert Puc ausgelegt. Da der Sicherheitswert Puc wie eingangs erwähnt in Abhängigkeit des Geräuschabstands variiert, wird im Folgenden zur Charakterisierung eines Teildetektors 1,2 der höchste Wert des Sicherheitswert Puc verwendet, der sich bei Variation des Geräuschabstands ergibt. Dies entspricht der IEC-Norm IEC60834-1, Abschnitt 2.4. Werte des Sicherheitswertes Puc sollten entsprechend dieser Norm bei einer analogen Übertragung 10⁻³ bis 10⁻⁶ betragen. Es sind jedoch Werte bis 10⁻³⁰ erreichbar. Werte für die Verlässlichkeit sollten zwischen 10⁻² bis 10⁻⁴ betragen.

Es ist anhand von Figur 4 ersichtlich, dass je nach Geräuschabstand SNR einer der Teildetektoren 1,2 dem anderen überlegen ist. Bei stark gestörtem Kanal, also bei niedrigem Geräuschabstand SNR, weist der erste Teildetektor 1 die kleinere maximale tatsächliche Übertragungszeit T_{ac} auf. Bei stark gestörtem Kanal, also bei hohen Werten des Geräuschabstands SNR, weist der zweite Teildetektor 2 die kleinere maximale tatsächliche Übertragungszeit T_{ac} auf. Der erfindungsgemässe Detektor 7 weist durch die ODER-Verknüpfung der Teildetektorausgänge 3,4 immer die kleinstmögliche maximale tatsächliche Übertragungszeit T_{ac} auf.

Um den Detektor 7 mit den Teildetektoren 1,2 vergleichen zu können, ist zu berücksichtigen, dass durch die ODER-Verknüpfung 5 die Sicherheit des Detektors 7 verkleinert wird, das heisst, die Wahrscheinlichkeit, dass ein nicht gesendetes Signal detektiert wird, wird erhöht. Im schlimmsten Fall ergibt sich eine Halbierung der Sicherheit. Bei n Teildetektoren 1,2 wird die Sicherheit um den Faktor n verkleinert, respektive der Sicherheitswert Puc um den Faktor n erhöht. Um die gleiche Sicherheit des Detektors 7 wie bei Verwendung nur eines Teildetektors 1,2 zu erreichen, wird die Sicherheit der Teildetektoren 1,2 erhöht, so dass die Gesamtsicherheit gleich der ursprünglichen Sicherheit der Teildetektoren 1,2 ist. Es ist maximal eine Erhöhung auf den doppelten Sicherheitswert erforderlich. Verfahren zur entsprechenden Bestimmung der Parameter der Teildetektoren 1,2 sind aus der Detektionstheorie bekannt.

Figur 5 zeigt die Kurven von Figur 4, ergänzt um eine Abhängigkeit für einen erfindungsgemässen Detektor, der auf gleiche Sicherheit wie die Teildetektoren ausgelegt ist. Es zeigt sich, dass durch die Erhöhung der Sicherheit die Verlässlichkeit etwas kleiner wird, respektive dass die maximale tatsächliche Übertragungszeit T_{ac}, also die Übertragungszeit für eine vorgegebene Verlässlichkeit, etwas ansteigt. Der Detektor 7 ist jedoch auf Übertragungskanälen, bei denen der Geräuschabstand SNR in einem weiten Bereich in unvorhersehbarer Weise variieren kann, den beiden ursprünglichen, auf gleiche Sicherheit ausgelegten Teildetektoren 1,2 immer noch überlegen.

In einer bevorzugten Ausführungsform der Erfindung weisen die mindestens zwei Teildektoren alle mindestens annähernd die gleiche Sicherheit auf. Dadurch wird auch die Sicherheit des Detektors bestmöglich an die Anforderung der Befehlsübertragung angepasst. Wäre die Sicherheit eines einzelnen Teildetektors 1,2 kleiner als des oder der übrigen Teildetektoren, so würde diese die Sicherheit des Detektors 7 dominieren. Eine vergleichsweise hohe Sicherheit der übrigen Teildetektoren würde sich nur wenig auf die Sicherheit des Detektors 7 auswirken. Kompromisse bezüglich anderer Parameter der übrigen Teildetektoren, die zum Erreichen ihrer hohen Sicherheit notwendig wären, würden ihr Verhalten beispielsweise bezüglich Verlässlichkeit und Übertragungszeit verschlechtern. Damit würde auch das Verhalten des Detektors 7 als ganzem unnötig verschlechtert.

Bei Verwendung von mehr als zwei Teildetektoren 1,2 werden Zeitkonstanten der mehreren Teildetektoren beispielsweise gemäss einer arithmetischen oder geometrischen Folge ausgewählt und die Ausgänge aller Teildetektoren ODER-verknüpft.

Die Elemente des Detektors 7, welche den Signalfluss gemäss Figur 3 realisieren, werden vorzugsweise durch eine entsprechend programmierte Datenverarbeitungseinheit oder durch anwendungsspezifische integrierte Schaltungen (ASICs, FPGAs) realisiert. Sie sind aber auch durch analoge Bauelemente und/oder in Kombination mit diskreten Logikelementen und/oder programmierten Schaltkreisen implementierbar. In einer bevorzugten Ausführungsform der Erfindung ist der Detektor 7 mittels eines entsprechend programmierten digitalen Signalprozessors implementiert.

Ein Computerprogramm zum zeitoptimalen Empfang von Schutzbefehlen in einem Fernauslösegerät gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt ein computerlesbares Medium auf, auf welchem die Computerprogrammcodemittel gespeichert sind.

Durch die Verwendung eines erfindungsgemässen Detektors 7 ist keine Einstellung einer Signalauswertezeit respektive Zeitkonstante eines Detektors mehr notwendig. Es müssen also auch keine - immer mit Ungewissheit behafteten - Annahmen über die Störverhältnisse einer vorgesehenen Anwendung getroffen werden.

### Bezugszeichenliste

- 1: erster Teildetektor
- 2: zweiter Teildetektor
- 3: erster Teildetektorausgang
- 4: zweiter Teildetektorausgang
- 5: ODER-Verknüpfung
- 6: Detektorausgang
- 7: Detektor
- 8: Empfangssignaleingang
- 11: erste Kennlinie
- 12: zweite Kennlinie
- 13: dritte Kennlinie
- T_{ac}: maximale tatsächliche Übertragungszeit

## Patentansprüche

1. Verfahren zum zeitoptimalen Empfang von Schutzbefehlen in einem Fernauslösegerät, wobei ein erster Teildetektor (1) betrieben wird, welcher zur Detektion eines Signales einer ersten Frequenz mit einer ersten Übertragungszeit ausgelegt ist, **dadurch gekennzeichnet,**
**dass** mindestens ein zweiter Teildetektor (2) betrieben wird, welcher zur Detektion des Signales der ersten Frequenz mit einer zweiten, von der ersten Obertragungszeit verschiedenen Übertragungszeit ausgelegt ist, und
**dass** das Signal als detektiert gilt, wenn mindestens einer dieser Teildetektoren (1,2) ein Vorhandensein des Signals detektiert.

2. Verfahren gemäss Anspruch 1, **dadurch gekennzeichnet, dass** die mindestens zwei Teildetektoren (1,2) auf gleiche Sicherheitswerte Puc ausgelegt sind.

3. Fernauslösegerät mit einem Detektor (7) zum zeitoptimalen Empfang von Schutzbefehlen, wobei der Detektor (7) einen ersten Teildetektor (1) aufweist, der für ein Signal einer ersten Frequenz und für eine erste Übertragungszeit ausgelegt ist, **dadurch gekennzeichnet,**
**dass** der Detektor (7) mindestens einen zweiten Teildetektor (2) aufweist, der für das Signal der ersten Frequenz und für eine zweite, von der ersten Übertragungszeit verschiedene Übertragungszeit ausgelegt ist, und
**dass** der Detektor eine nicht-exklusive ODER-Verknüpfung von Teildetektorausgängen (3,4) der mindestens zwei Teildetektoren (1,2) zur Bildung eines Ausgangs (6) des Detektors (7) aufweist.

4. Fernauslösegerät gemäss Anspruch 3, **dadurch gekennzeichnet, dass** die mindestens zwei Teildetektoren (1,2) auf gleiche Sicherheitswerte Puc ausgelegt sind.

## Claims

1. Method for time-optimum reception of protection commands in a remote tripping device, with a first detector element (1) being operated, which is designed for detection of a signal at a first frequency and with a first transmission time,
**characterized**
**in that** at least one second detector element (2) is operated, which is designed for detection of the signal at the first frequency and with a second transmission time, which is not the same as the first transmission time,
and
**in that** the signal is regarded as having been detected when at least one of these detector elements (1, 2) detects the presence of the signal.

2. Method according to Claim 1, **characterized in that** the at least two detector elements (1, 2) are designed for the same safety and/or security values Puc.

3. Remote tripping device having a detector (7) for time-optimum reception of protection commands, with the detector (7) having a first detector element (1), which is designed for a signal at a first frequency and for a first transmission time,
**characterized**
**in that** the detector (7) has at least one second detector element (2), which is designed for the signal at the first frequency and for a second transmission time, which is not the same as the first transmission time, and in that the detector has non-exclusive OR logic linking of detector element outputs (3, 4) of the at least two detector elements (1, 2) in order to form an output (6) of the detector (7).

4. Remote tripping device according to Claim 3,
**characterized in that** the at least two detector elements (1, 2) are designed for the same safety and/or security values Puc.

## Revendications

1. Procédé pour la réception optimisée dans le temps de commandes de protection dans un dispositif de déclenchement à télécommande, dans lequel on utilise un premier détecteur partiel (1), celui-ci étant conçu pour la détection d'un signal d'une première fréquence avec une première durée de transmission, **caractérisé en ce qu'**on utilise au moins un deuxième détecteur partiel (2), celui-ci étant conçu pour la détection du signal de la première fréquence avec une deuxième durée de transmission différente de la première durée de transmission, et **en ce que** le signal est considéré comme détecté lorsqu'au moins un de ces détecteurs partiels (1, 2) détecte une existence du signal.

2. Procédé selon la revendication 1, **caractérisé en ce qu'**au moins les deux détecteurs partiels (1, 2) sont conçus sur les mêmes valeurs de sécurité Puc.

3. Dispositif de déclenchement à télécommande avec un détecteur (7) pour la réception optimisée dans le temps de commandes de protection, dans lequel le détecteur (7) comporte un premier détecteur partiel (1) qui est conçu pour un signal d'une première fréquence et pour une première durée de transmission, **caractérisé en ce que** le détecteur (7) comporte au moins un deuxième détecteur partiel (2) qui est conçu pour le signal de la première fréquence et pour une deuxième durée de transmission différente de la première durée de transmission, et **en ce que** le détecteur comporte une opération logique OU non-exclusif avec les sorties (3, 4) de détecteurs partiels des deux détecteurs partiels (1, 2) au moins pour réaliser une sortie (6) du détecteur (7).

4. Dispositif de déclenchement à télécommande selon la revendication 3, **caractérisé en ce qu'**au moins les deux détecteurs partiels (1, 2) sont conçus sur les mêmes valeurs de sécurité Puc.
